# EUROPEAN PATENT APPLICATION

(11) **EP 2 075 658 A1**
(43) Date of publication of application: **01.07.2009**
(21) Application number: 07425843.5
(22) Date of filing: 31.12.2007
(51) Int. Cl.: G05B 19/418

(54) **Integrated packaging system architecture**

(71) Applicant: Tetra Laval Holdings & Finance SA, 1009 Pully (CH)
(72) Inventor: Donati, Claudio, 41100 Modena (IT); Tacconi, Lorenzo, 41100 Modena (IT); Larsson, Peter, 240 14 Veberöd (SE)
(74) Representative: Bergadano, Mirko

(57) **Abstract**

A Packaging System (PS) including:
• a Packaging Line (PL) comprising a Filling Machine (FM) and one or more Distribution Equipments (DE) connected via Conveyors, the Filling Machine and each Distribution Equipment including an electronic control system designed to store and execute software modules;
• a Line Controller (LC) programmed to manage configuration, communication and control of the Packaging Line, the Line Controller including a display, a keyboard, and a processing system designed to store and execute software applications configured to cooperate with the software modules in the Filling Machine and Distribution Equipments;
• a common overhead Message Display designed to provide basic visual information on the operation of the Filling Machine and the Distribution Equipments; and
• a Communication Network designed to connect the Line Controller to the Filling Machine, the Distribution Equipments, and the Message Display;
wherein the software applications in the Line Controller include:
• a Line Configurator, which is a supportive "plug and play" tool designed to reduce and secure effective Packaging Line installation, start up and tuning at the manufacturing floor;
• a Line Commander, which is a master controller tool designed to optimize Packaging Line performance and product flows during production;
• a Recipe Manager, which is a management tool designed to accommodate production flexibility by improving "easy to use" Packaging Line resources and material; and
• a Conveyor Optimizer, which is a tool designed to optimize product transportation along the Conveyors.

## Description

### TECHNICAL FIELD OF THE INVENTION

The present invention relates in general to food packaging, and in particular to continuous sealed packaging of pourable food products.

### BACKGROUND ART

As is known, on a factory floor of a food packaging plant, several specifically-aimed processes are generally performed, including incoming food and packaging material storage, food processing, food packaging, and package warehousing. With specific reference to pourable food products, food packaging is performed in Packaging Lines, each of which is an assembly of machines and equipments for the production and handling of packages, and includes a Filling Machine for the production of the packages, followed by one or more defined configurations of downstream Distribution Equipments such as, accumulators, straw applicators, film wrappers, and cardboard packers, connected to the Filling Machine via Conveyors, for the handling of the packages.

A typical example of this type of packages is the parallelepiped-shaped package for pourable food products known as Tetra Brik Aseptic ®, which is made by folding and sealing laminated strip packaging material. The laminated packaging material comprises layers of fibrous material, e.g. paper, covered on both sides with heat-seal plastic material, e.g. polyethylene. In the case of aseptic packages for long-storage products, such as UHT milk, the side of the packaging material eventually contacting the food product inside the package also has a layer of oxygen-barrier material, e.g. aluminium foil or EVOH film, which in turn is covered with one or more layers of heat-seal plastic material.

Packages of this sort are produced on fully automatic Filling Machines, wherein a continuous vertical tube is formed from a web of packaging material. The web is sterilized by applying a sterilizing agent such as hydrogen peroxide, which is subsequently removed, e.g. evaporated by heating, from the surfaces of the packaging material; and the sterilized web is maintained in a closed, sterile environment, and is folded and sealed longitudinally to form tube. The tube is then filled downwards with the sterilized or sterile-processed pourable food product, and is fed along a vertical path to a forming station, where it is gripped along equally spaced cross section by two pairs of jaws, which act cyclically and successively on the tube, and seal the packaging material of tube to form a continuous strip of pillow packs connected to one another by transverse sealing strips. Pillow packs are separated from one another by cutting the relative sealing strips, and are conveyed to a final folding station where they are folded mechanically into the finished parallelepiped shape.

Existing, first-generation Packaging Lines generally have a decentralized control, poor or even no configuration flexibility, and different communication channels and automation solutions and hardware, and generally require customization of the line automation software in the Filling Machine and each Distribution Equipment.

Therefore, existing Packaging Line automation and control systems cannot provide the flexibility and functionality features required to satisfy the ever-increasing market demand for food safety and traceability, and for higher production versatility.

However, despite their age, many legacy automation and control systems continue to provide valuable functionality that warrants their upgrade, represent a huge capital investment that production management want to prolong.

An ever-increasing need is hence felt for a packaging plant automation evolution, in particular for new generation Packaging Lines featuring integrated solutions such as centralized and robust automation control, increased configuration flexibility, same communication channels and automation solutions and hardware, and no need for customization of the line automation software in the Filling Machines and Distribution Equipments.

### OBJECT AND SUMMARY OF THE INVENTION

The objective of present invention is to provide a new generation Packaging Line which meets the aforementioned need.

This objective is achieved by the present invention in that it relates to a Packaging System, as defined in the appended claims.

### BRIEF DESCRIPTION OF THE DRAWINGS

For a better understanding of the present invention, preferred embodiments, which are intended purely by way of example and are not to be construed as limiting, will now be described with reference to the attached drawings (all not to scale), wherein:
- Figure 1 shows schematically an integrated Packaging System according to a first embodiment of the present invention;
- Figure 2 shows a block diagram depicting the general architecture of the Packaging System of Figure 1;
- Figure 3 shows a block diagram depicting the general topology of an Ethernet Network of the Packaging System of Figure 1;
- Figure 4 shows schematically a layout of a Distribution Equipment of the Packaging System of Figure 1;
- Figures 5 to 8 show block diagrams depicting different schematic layouts of an integrated Packaging System according to the first embodiment of the present invention;
- Figure 9 shows a block diagram depicting the modular architecture of the software in the Packaging Line;
- Figures 10 to 16 show different configuration windows of a Graphical User Interface during the configuration of the Packaging Line;
- Figures 17 and 18 show commands and reply messages exchanged between the Line Commander and the Distribution Equipments to implement a start/stop policy;
- Figures 19 to 21 show commands and reply messages exchanged between the Line Commander and the Distribution Equipments to implement a package flow control policy;
- Figure 22 shows a configuration window related to a Recipe Configuration function;
- Figures 23 and 24 are exemplary of initial, intermediate and final packages related to two different Production Recipes;
- Figure 25 shows a block diagram depicting a Production Recipe definition process;
- Figure 26 shows a configuration window related to a Conveyor Settings function;
- Figure 27 shows a configuration window related to a Conveyor Lubricating and Cleaning function;
- Figure 28 shows schematically the tasks carried out by a PLMS Centre;
- Figure 29 shows a block diagram depicting the package traceability task carried out by the PLMS Centre; and
- Figures 30 to 34 show block diagrams depicting different schematic layouts of an integrated Packaging System according to a second embodiment of the present invention.

### DETAILED DESCRIPTION OF PREFERRED EMBODIMENTS OF THE INVENTION

The following discussion is presented to enable a person skilled in the art to make and use the invention. Various modifications to the embodiments will be readily apparent to those skilled in the art, without departing from the scope of the present invention as claimed. Thus, the present invention is not intended to be limited to the embodiments shown, but is to be accorded the widest scope consistent with the principles and features disclosed herein and defined in the appended claims.

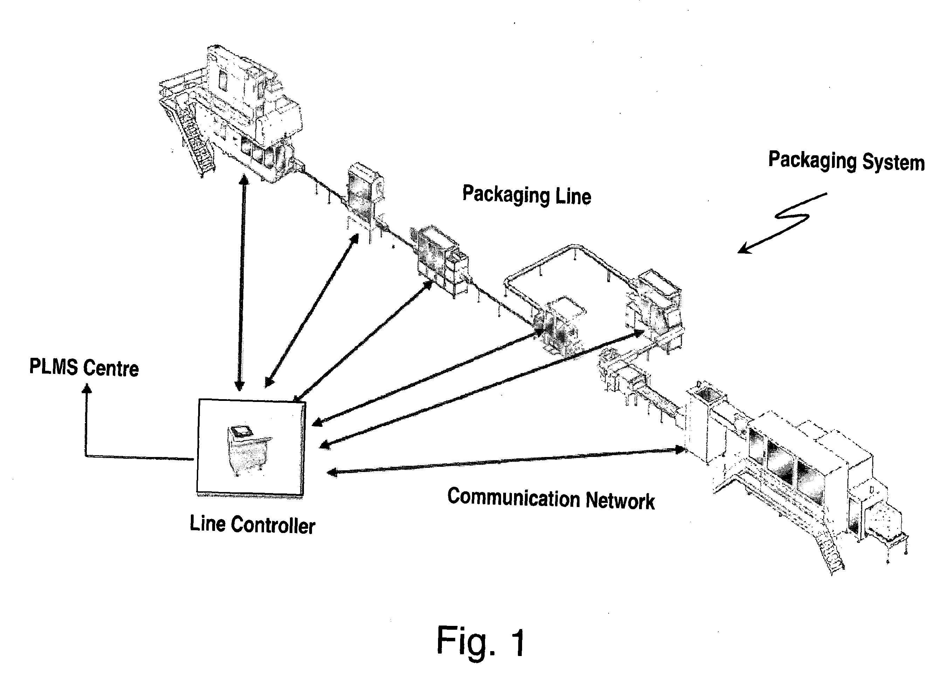

Figure 1 shows a schematic layout of an integrated Single-Line Packaging System (PS) according to an embodiment of the present invention. The Packaging System includes:
- a Packaging Line (PL) including a Filling Machine (FM) followed by one or more defined configurations of downstream Distribution Equipments (DE) such as, Accumulators, Straw Applicators, Cap Applicators, Handle Applicators, Cardboard Packers, Film Wrappers, Configuration Switches, Dynamic Switches, and Pallet Systems, which are cascade connected to each other or to the Filling Machine (FM) via Conveyors (C), which are all known per se and hence will not be described in detail;
- a Line Controller (LC) designed and programmed to manage configuration, communication and control of the Packaging Line with the aim of optimizing the interaction between the Filling Machine and the Distribution Equipments to improve the Packaging Line performance and product transportation during production;
- a Packaging Line Monitoring System (PLMS) Centre designed and programmed to cooperate with Line Controller to measure, analyze, and optimize the operational performance of the Packaging Line;
- a common overhead Message Display designed to provide a basic visual information on the operation of the Filling Machine and Distribution Equipments, such as production information, equipment stop, material request, line phase, etc.; and
- a common Communication Channel Infrastructure comprising a star-topology, switch-based Ethernet Network designed to connect the Line Controller to the Filling Machine, the Distribution Equipments, and the Message Display; a Ethernet Network designed to connect the Line Controller to the PLMS Centre; a DeviceNet network designed to connect the Line Controller to the Conveyors, a digital I/O designed to connect the Line Controller to a Conveyor Lubricating Unit; and a safety bus designed to provide a safety serial communication between zone-based safety PLCs in the Line Controller, the Filling Machine, the Distribution Equipments, and the Conveyors, to allow an easier fulfilment of the legal requirements in Integrated Manufacturing Systems (e.g.: ISO 11161, Packaging line CE marking at customer site).

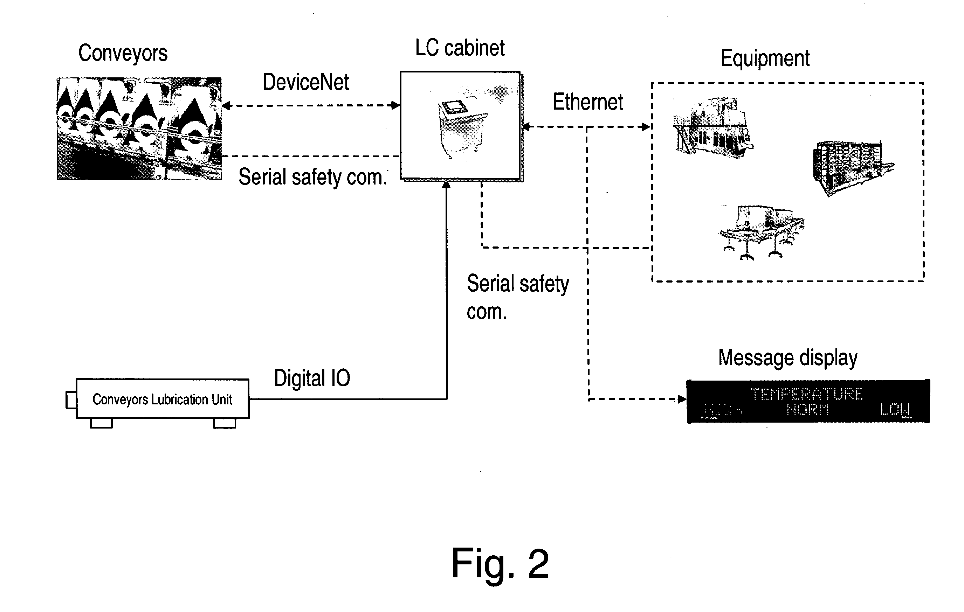

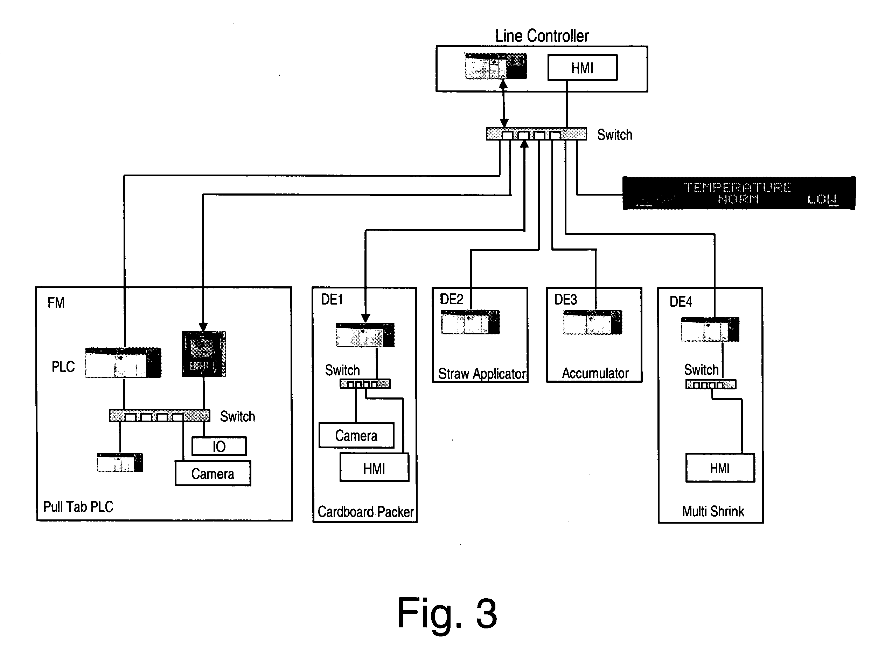

Figure 2 shows schematically the general architecture of the Packaging System, while Figure 3 shows schematically the general topology of the Ethernet Network, wherein same reference numerals as those in Figure 1 reference the same elements.

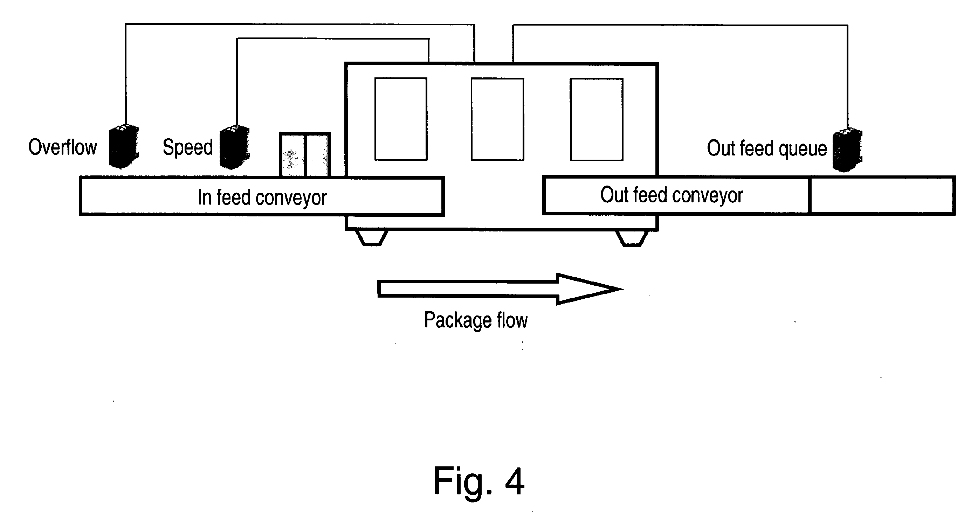

Figure 4 shows schematically a Distribution Equipment, which is equipped with an in-feed Conveyor provided with a queue resistor-based photocell sensor (overflow sensor) and a counting resistor-based photocell sensor (speed sensor), an out-feed Conveyor provided with a queue resistor-based photocell sensor, and a local Programmable Logic Controller (PLC) designed to store and execute local control software modules configured to individually control the in-feed and out-feed Conveyors and to provide a homogeneous and standard interface.

Each Conveyor in the Packaging Line (other than the in-feed and out-feed Conveyors of the Distribution Equipments, and hence not to be mistaken for the latter) may be of a bypass type, a switch type, and a transporter type, and the latter may in turn be of an accumulation type or a simple start/stop type. Each Conveyor is directly electronically controlled by the Line Controller and is provided with a Conveyor Manager based on an automation distribute concept and DeviceNet field bus, a Conveyor Motor equipped with a Frequency Converter Unit and I/O unit remote, and a power distribution (380V and 24V) based on a daisy-chain topology.

A Configuration Switch defines the package flow path in a static way, so that the Packaging Line assumes the same configuration during the same production batch, also called Production Recipe, as described in more detail hereinafter. In particular, the position of a Configuration Switch is defined manually or automatically during the initial configuration of the Packaging Line corresponding to a selected Production Recipe, and remains the same during all the production phase.

A Dynamic Switch defines the package flow path in a dynamic way, so that the Packaging Line may assume different configurations during the same production batch. In particular, a Dynamic Switch can be manually or automatically operated to change its operating position during a production phase, but it is not a device to continuously control the flow during the production. For example, a Dynamic Switch may be used to redirect the package flow to a back-up Distribution Equipment, in order to avoid a congestion of the Packaging Line.

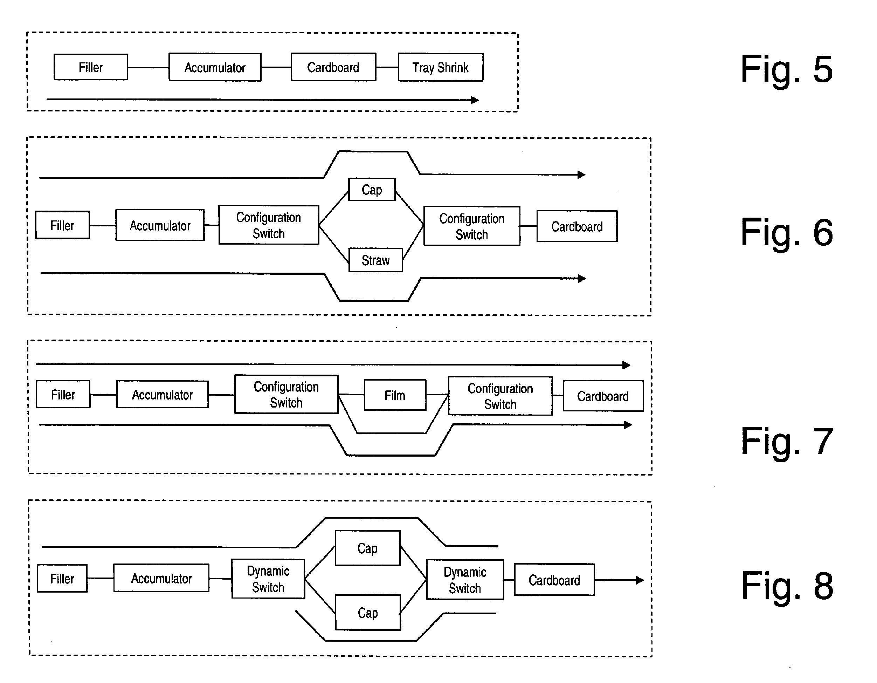

Figures 5 to 8 show four different examples of Packaging Lines. In particular, Figure 5 shows a straight Packaging Line including, in order, a Filling Machine, an Accumulator, a Cardboard Packer, and a Cardboard Tray Wrapper. Figure 6 shows a Packaging Line including, in order, a Filling Machine, an Accumulator, a first Configuration Switch, a Cap Applicator and a Straw Applicator which are operatively arranged in parallel and are selectively operable, a second Configuration Switch, and a Cardboard Packer, wherein the two Configuration Switches allow two different paths, and hence two different package flows, to be alternatively selected, one including the Cap Applicator and the other including the Straw Applicator, which Applicators cannot work together. Figure 7 shows a Packaging Line including, in order, a Filling Machine an Accumulator, a first Configuration Switch, a Film Wrapper and a By-pass Conveyor which are operatively arranged in parallel, a second Configuration Switch, and a Cardboard Packer, wherein the two Configuration Switches allow the Film Wrapper to be by-passed, thus selectively providing two different paths, and hence two different package flows, one including the Film Wrapper and the other not including the Film Wrapper. Figure 8 shows a Packaging Line including, in order, a Filling Machine, an Accumulator, a first Dynamic Switch, a first Cap Applicator and a second Cap Applicator operatively arranged in parallel, a second Dynamic Switch, and a Cardboard Packer, wherein the two Dynamic Switches allow the two Cap Applicators to be simultaneously used, thus providing a single package flow.

The Line Controller includes a stand-alone console or cabinet equipped with a Human-Machine Interface (HMI) made up of a display panel and a keyboard, and a PLC-based control system designed to store and execute modular-architecture software applications or tools configured to cooperate with the local software modules in the Filling Machine and the Distribution Equipments via a standard communication to control and supervise operation of the Packaging Line.

For the purpose of the present invention, by the expression "software applications" it is intended a defined subclass of computer software that employs the capabilities of a computer directly to a task that the user wishes to perform.

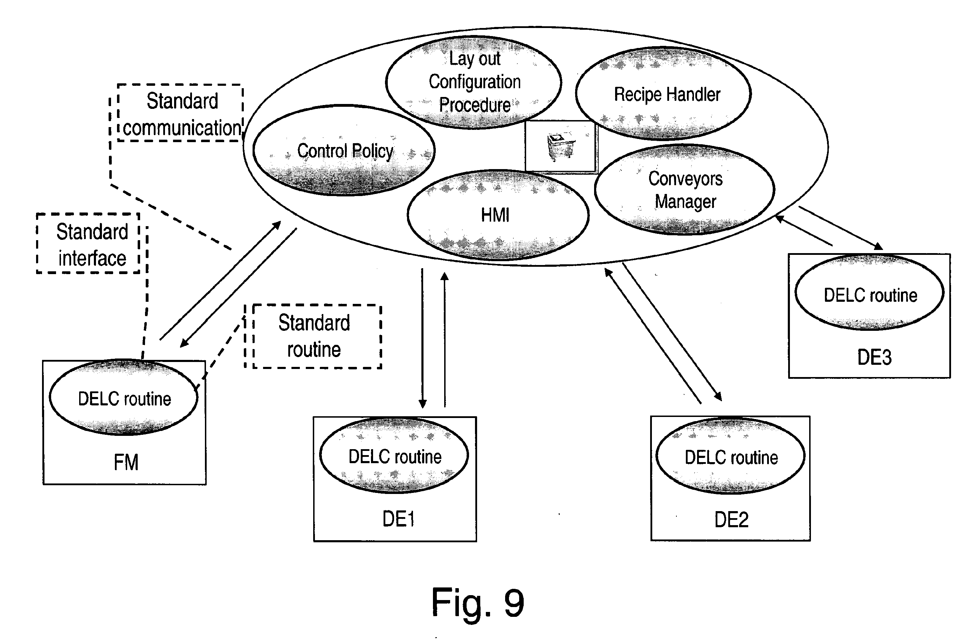

Figure 9 shows a block diagram depicting the modular-architecture software in the Line Controller and in the Filling Machine and Distribution Equipments.

In detail, the software applications in the Line Controller include:
- a Line Configurator, which is a supportive "plug and play" tool designed to reduce and secure effective Packaging Line installation, start up and tuning at the manufacturing floor;
- a Line Commander, which is a master controller tool designed to optimize Packaging Line performance and product flows during production;
- a Recipe Manager, which is a management tool designed to accommodate production flexibility by improving "easy to use" Packaging Line resources and material; and
- a Conveyor Optimizer, which is a tool designed to optimize product transportation along the Conveyors.

The Line Configurator is a software application designed to provide a Graphical User Interface (GUI) which allows four different configuration functionality to be selected/implemented by an operator or specialized technician, namely:
- Machine Detection,
- Layout Configuration,
- Layout Association, and
- Line Settings.

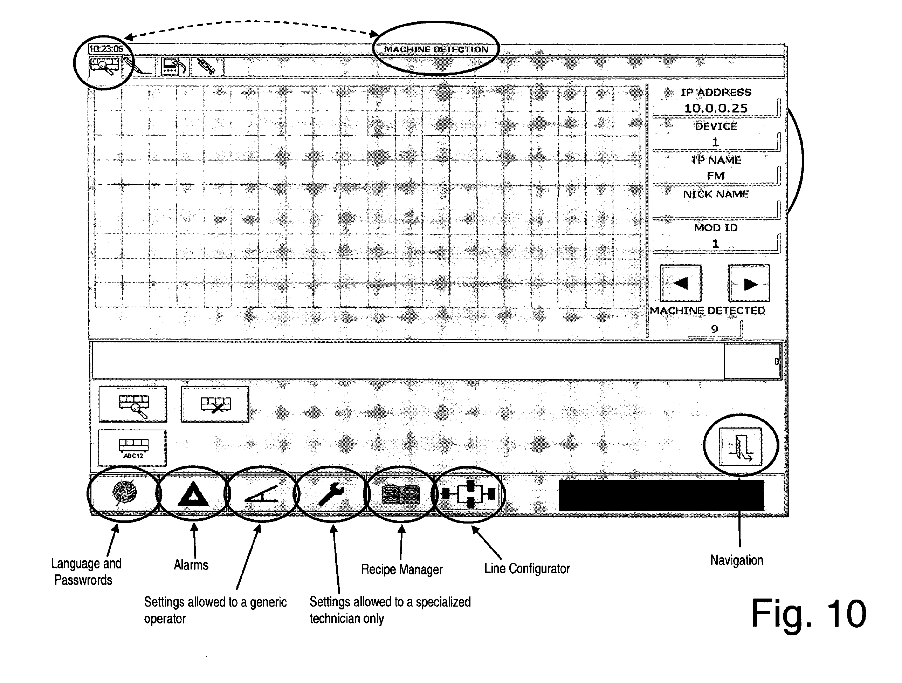

Figures 10 to 16 show examples of configuration windows of the Graphical User Interface during the configuration of the Packaging Line and related to the aforementioned Machine Detection, Layout Configuration, and Layout Association functions.

All configuration windows display, in their bottom areas, a plurality of soft keys which are arranged side by side and include, in order, a soft key related to language and password settings, a soft key related to alarm settings, a soft key related to settings which are allowed to a generic operator, a soft key related to settings which are allowed to a specialized technician only, a soft key related to the above-described Recipe Manager, a soft key related to the above-described Line Configurator, and a navigation soft key to allow an operator to move through the configuration windows.

Figure 10 shows the configuration window related to the Machine Detection functionality. When the operator clicks on a Machine Detection soft key displayed on the top, right corner of the Graphical User Interface, the Line Configurator automatically detects and identifies the Filling Machine, the Distribution Equipments and the Conveyors in the Packaging Line, and upload the production capabilities thereof. To do so, the Line Configurator sends an identification request to the Filling Machine and the Distribution Equipments in the Packaging Line, which reply by sending to the Line Controller their addresses in the common communication network. Based on that, the Line Configurator probes for identity and production information of the Filling Machine and the Distribution Equipments, which send back their ID card messages. The example shown in Figure 10 relates to the detection of a Filling Machine (FM) with IP address 10.0.0.25.

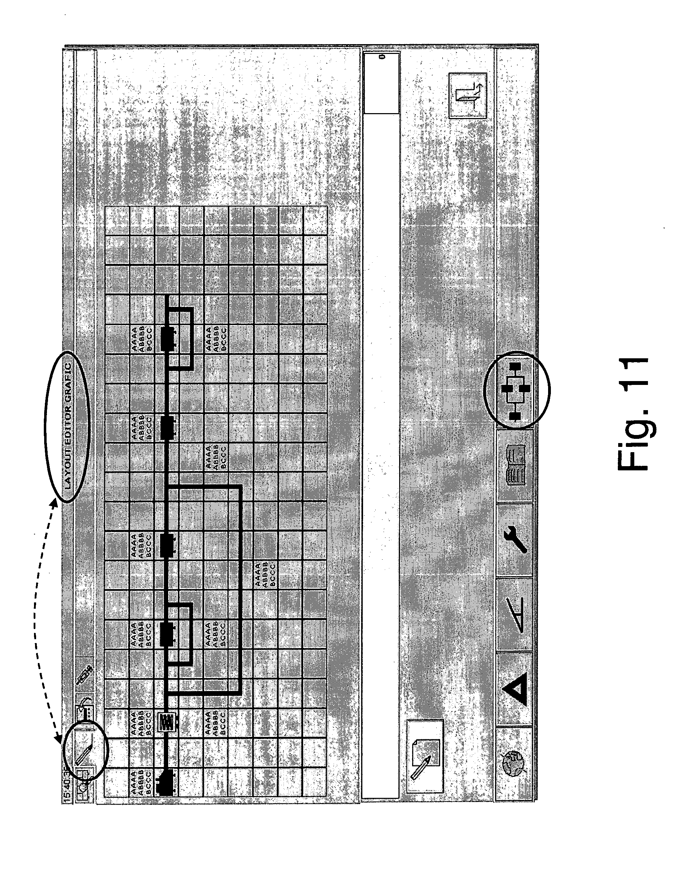

When the Filling Machine, the Distribution Equipments and the Conveyors in the Packaging Line have been detected and identified, and the operating parameters thereof uploaded, the operator is allowed to click on a Layout Configuration soft key to graphically build a Packaging Line layout. Figure 11 shows the configuration window related to the Layout Configuration functionality. In particular, when the operator clicks on a Layout Configuration soft key displayed on the top, right corner of the Graphical User Interface, a layout graphical editor is provided which allows the operator to graphically create the Packaging Line layout by drawing on the display of the Line Controller the Filling Machine and the individual Distribution Equipments and Conveyors, and to set the production/operating parameters thereof. In particular, the Graphical User Interface is designed to provide a display area which is divided into matrix-arranged, square-shaped display pixels, and the graphical drawing of the Packaging Line layout may be made by the operator simply clicking repeatedly on a display pixel to sequentially display the graphical representations of different types of Filling Machines, Distribution Equipments, and Conveyors, the production/operating capabilities each of which are stored in an appropriate database.

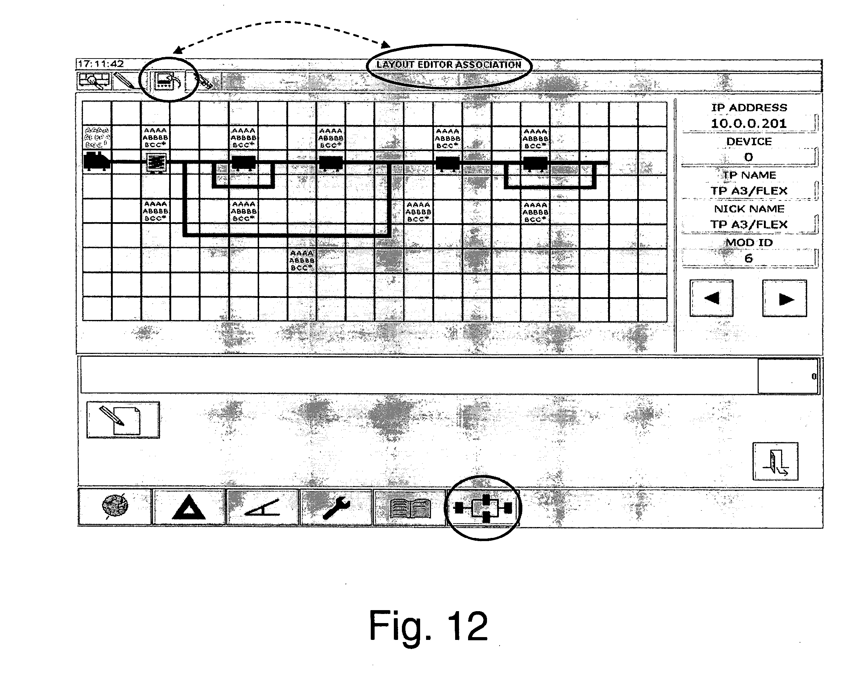

Once the Packaging Line layout has been entirely graphically drawn, the operator is allowed to click on a Layout Association soft key to associate the graphical representations of the Filling Machine, Distribution Equipment(s), and Conveyor(s) with the identified Filling Machine, Distribution Equipment(s), and Conveyor(s) in the real Packaging Line. Figure 12 shows the configuration window related to the Layout Association functionality. In particular, when the operator clicks on a Layout Association soft key displayed on the top, right corner of the Graphical User Interface, the operator is allowed to graphically select one by one the graphical representations of the Filling Machine, Distribution Equipments, and Conveyors, and to associate the selected graphical representation with an identified Filling Machine, Distribution Equipment, and Conveyor. The association of the graphical representation of a Filling Machine, Distribution Equipment, and Conveyor displayed in the selected pixel(s) with a detected Filling Machine, Distribution Equipment, and Conveyor includes a match check to prevent a wrong association or an association with a Filling Machine, Distribution Equipment or Conveyor that is not actually present in the real Packaging Line which is to be configured. The example shown in Figure 12 relates to the association of two selected pixels, shown with a white background, with a TP A3/FLEX Filling Machine.

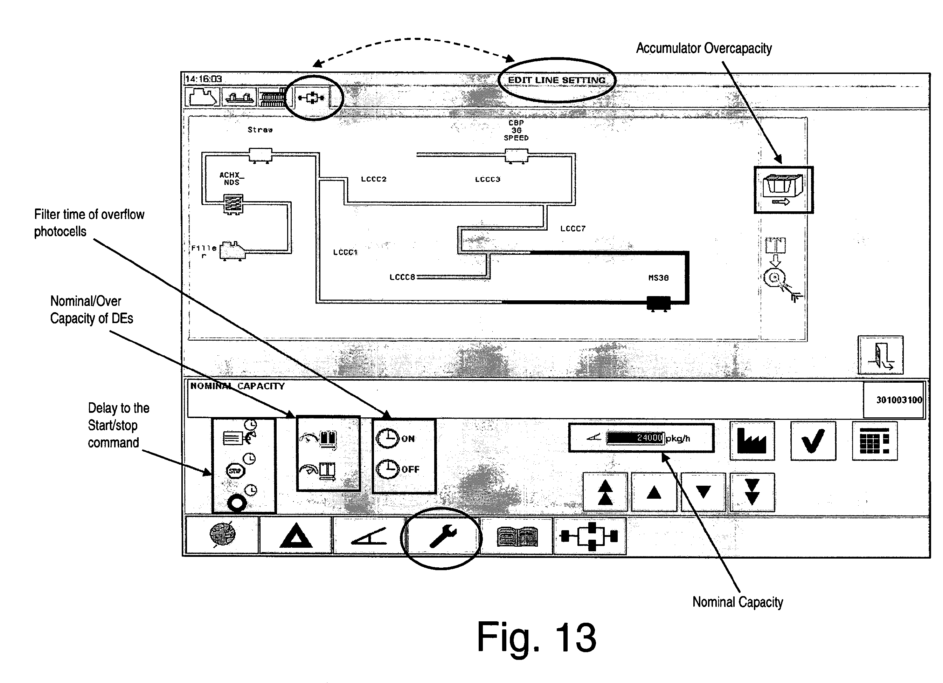

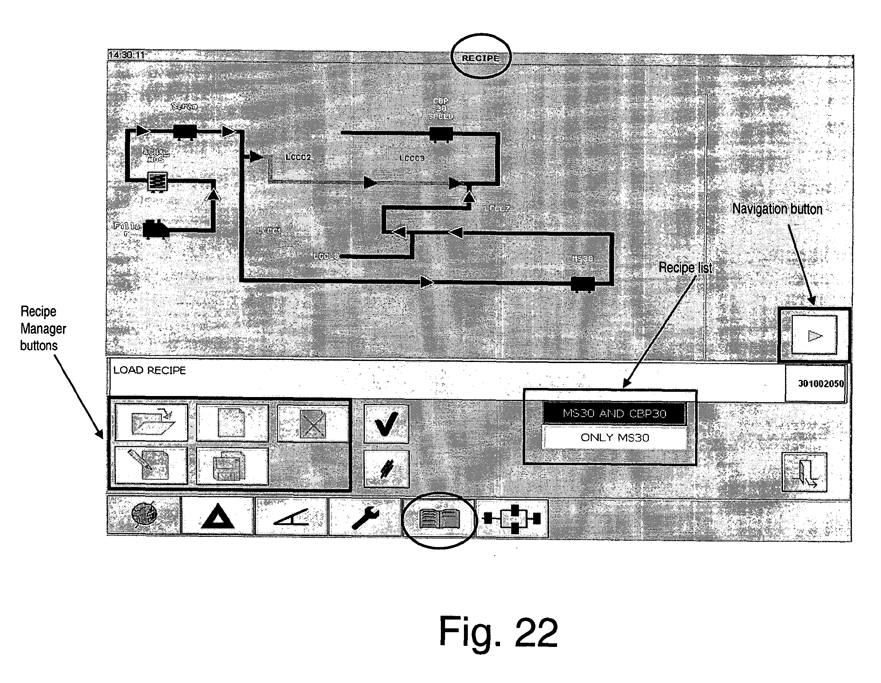

Once all the graphical representations of the Filling Machine, Distribution Equipments, and Conveyors have been associated with a corresponding identified Filling Machine, Distribution Equipment, and Conveyor, and after a Production Recipe has been created by a specialized technician, as described in detail hereinafter with reference to Figures 22 to 26 relating to the Recipe Manager, the Packaging Line may be configured by the specialized technician by clicking on a Line Settings soft key displayed on the bottom area of the Graphical User Interface. Figures 13 to 16 show the configuration windows related to the Line Settings function. In particular, when the specialized technician clicks on the Line Settings soft key, the Graphical User Interface allows three different configuration functions to be selected and implemented, namely:
- Line Tuning;
- Filling Machine Mode; and
- Accumulation mode.

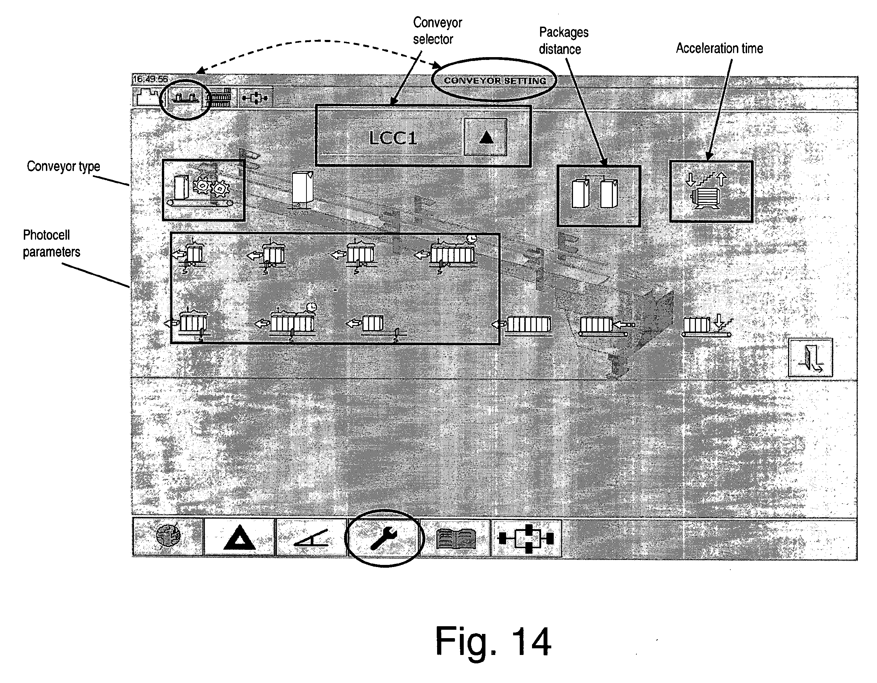

In particular, Figures 13 and 14 show the configuration windows related to the Line Tuning function. When the specialized technician clicks on the Line Tuning soft key, the Graphical User Interface allows the operator to select the active Filling Machines, Distribution Equipments and Conveyors, and the production path that fits with the production batch, and to on-line set up or change different automation parameters and configuration of the Packaging Line to be used during the start-up and production phases to optimize Packaging Line behavior. All the tuning and automation parameters are stored in a compact flash memory card, and are loaded when a recipe is selected, as will be described in detail hereinafter. The examples shown in Figures 13 and 14 relate to the setting of general parameters of the Packaging Line, such as the nominal capacity and the overcapacity of the Distribution Equipments, the filter time of the overflow photocell sensors, the delay to the Start/Stop commands, etc., and, respectively, to the setting of specific parameters of each individual Conveyor in the Packaging Line, such as the Conveyor type, the parameters of the photocell sensors, the package distance, the acceleration time, etc.

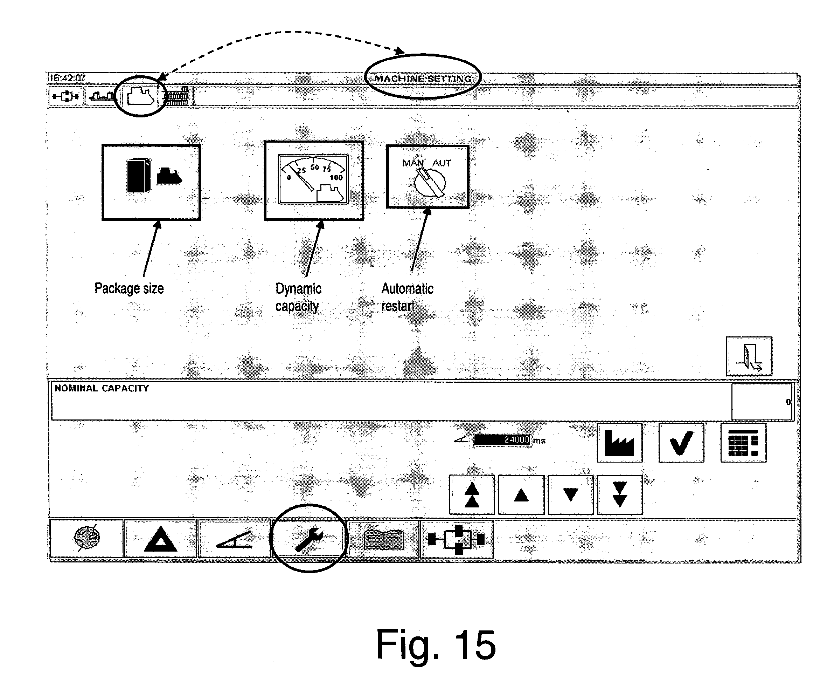

Figure 15 shows the configuration window related to the Filling Machine Mode function, which allows the operator to set the selectable production capacity (packages/hour), the dynamic production capacity (packages/hour), and the type of automatic restart (manual/automatic) of the Filling Machine.

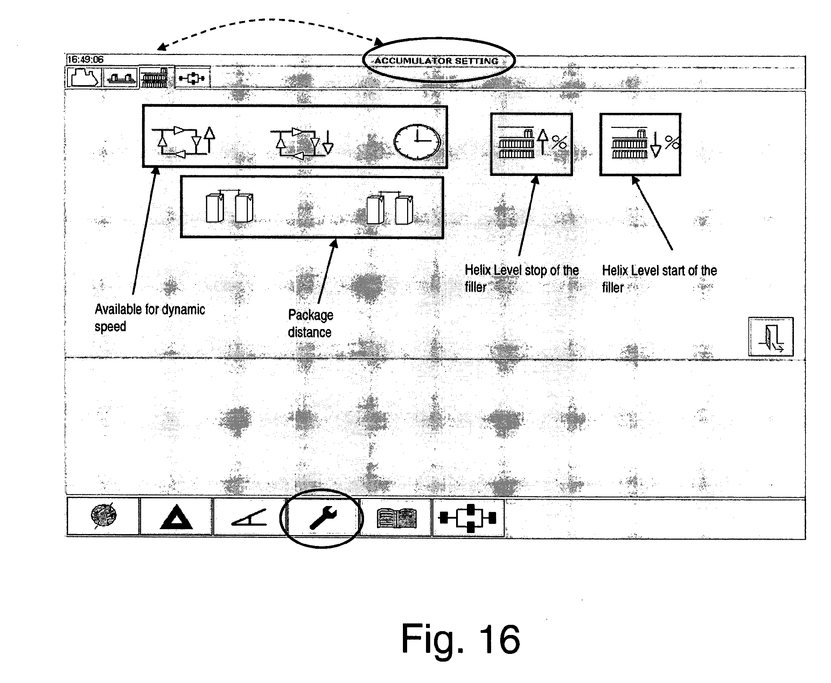

Figure 16 shows the configuration window of the Graphical User Interface related to the Accumulation Mode function, which allows the operator to set the parameters of each individual Accumulator in the Packaging Line, such as whether it is available for dynamic speed, the package distance, the level stop and the level start of the filler, etc.

Coming back to the software applications in the Line Controller, the Line Commander is the software application designed to optimize the Packaging Line performance and the product transportation during production. In particular, the Line Commander is designed to carry out the following tasks during production:
- Packaging Line supervision: operation of the Filling Machine, the Distribution Equipments and the Conveyors of the Packaging Line is supervised to optimize the Packaging Line performance and the product transportation. A basic visual information, such as production information, equipment stop, material request, line phase, etc., is provided via the common overhead message display, while a detailed visual information is provided via the display of the Line Controller, wherein a production page is displayed wherein individual parts of the Packaging Line are differently colored based on the information to be provided, and in particular:
   - Green: production
   - Gray: not present in the production recipe
   - White: preparation
   - Green Flashing: ready for production
   - Yellow: block
   - Yellow flashing: blocking; the Filling Machine or the Distribution Equipment receives o delivers packages but it is present an alarm;
- command dispatch and automatic restart: start/stop commands are dispatched to the Filling Machine, the Distribution Equipments, and the Conveyors in the Packaging Line other than those of the Filling Machine and the Distribution Equipments and directly controlled by the Line Controller, according to a start/stop policy that drives the start and stop phase in the Packaging Line. For example, distribution is stopped when no more packages are coming from upstream Distribution Equipments or when a downstream Distribution Equipment is blocked, so preventing the packages from crushing or getting damaged; and when in an out-feed Conveyor of a Distribution Equipment the queue photocell sensor activates, this Distribution Equipment stops autonomously, and the Line Commander stops the upstream Distribution Equipment(s);
- operating parameter transmission: operating parameters are transmitted to the Filling Machine and the Distribution Equipments of the Packaging Line to optimize the Packaging Line performance and the product transportation;
- product flow control policy: an algorithm is implemented to optimize the production and the package flows by dynamically regulating the capacity of the Filling Machine and of each single Distribution Equipment, so minimizing package queues and optimizing package accumulation. Filling Machine and Distribution Equipments operating states are collected and commands for the Filling Machine and each Distribution Equipment are generated based on the product flow control policy. For example, when in an in-feed Conveyor of a Distribution Equipment the speed photocell sensor activates, the Distribution Equipment increases its capacity and does not take any action at Packaging Line level; and when in an in-feed Conveyor of a Distribution Equipment the overflow photocell sensor activates, the Line Commander decreases the capacity of the upstream Distribution Equipment.

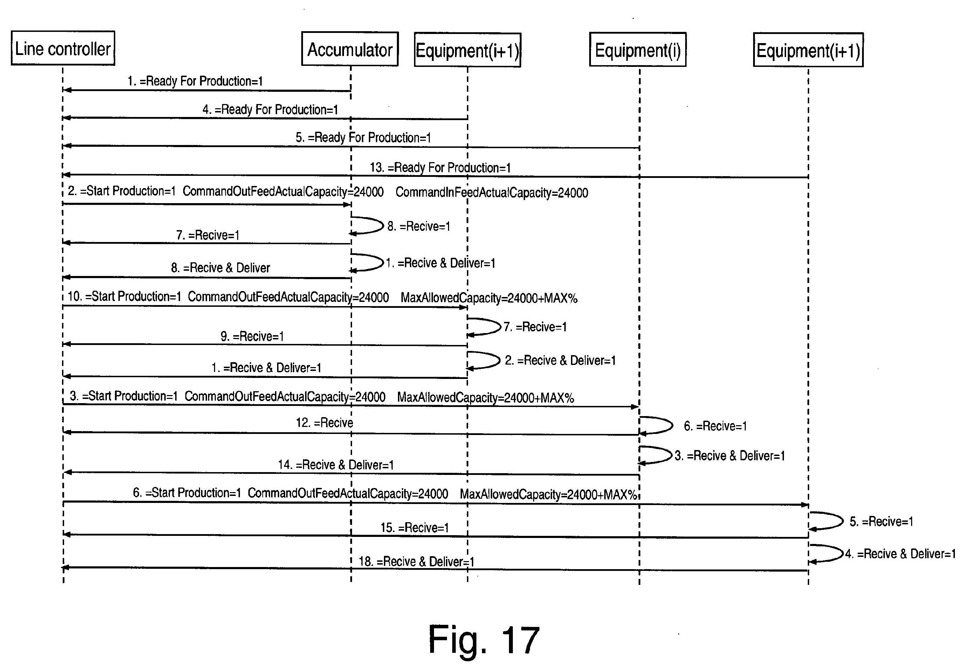

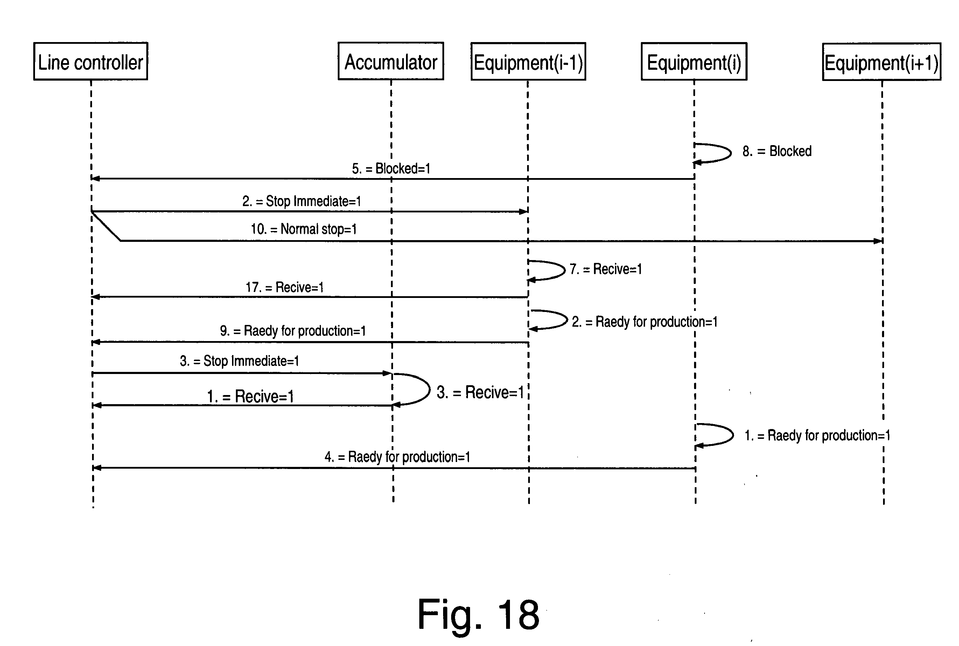

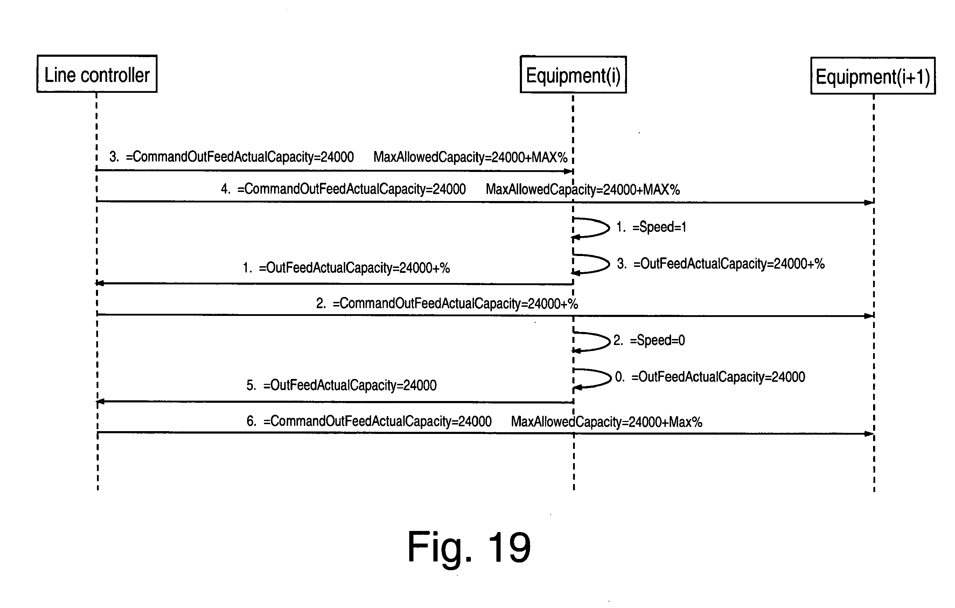

Figures 17 and 18 show commands and reply messages exchanged between the Line Commander and Distribution Equipments to implement a start/stop policy, while Figures 19 to 21 show commands and reply messages exchanged between the Line Commander and Distribution Equipments to implement a package flow control policy.

In particular, Figure 17 shows commands and reply messages exchanged between the Line Commander, an Accumulator, and three downstream Distribution Equipments, respectively referenced by "Equipment(i-1)", "Equipment(i)", and "Equipment(i+1)", during an automatic start procedure. In detail, when the Accumulator and the Distribution Equipments have notified the Line Commander that they are ready for production, the Line Commander initializes the Accumulator by sending thereto a command containing in-feed and out-feed capacities, in this example both equal to 24.000 packages/hour, and information that the production by the Filling Machine has started. Then, when the Accumulator starts to receive packages and also to deliver packages, it notifies the Line Commander accordingly via corresponding messages. Then, the Line Commander initializes the three Distribution Equipments by sending thereto respective commands containing their nominal capacities and overcapacities, in this example equal to 24.000 and 24.000+MAX% packages/hour, respectively, and information that the production by the Filling Machine has started. Then, when the Distribution Equipments starts to receive packages and also to deliver packages, they notify the Line Commander accordingly via corresponding messages.

Figure 18 shows commands and reply messages exchanged between the Line Commander, the Accumulator, and the three Distribution Equipments of Figure 17 during an automatic immediate stop procedure. In detail, when a Distribution Equipment blocks, in this example the one referenced by "Equipment(i)", the Line Commander is notified of this event via a corresponding message from the blocked Distribution Equipment. In response to this message, the Line Commander sends an immediate stop command to the Distribution Equipment upstream from the blocked Distribution Equipment, in this example the one referenced by "Equipment(i-1)", to stop it immediately, i.e., without completing the processing of the packages already fed to the Distribution Equipment, and a normal stop command to the Distribution Equipment downstream of the blocked Distribution Equipment, in this example the one referenced by "Equipment(i+1)", to stop it normally, i.e., after having completed the processing of the packages already fed to the Distribution Equipment. The Distribution Equipment upstream from the blocked Distribution Equipment acknowledges receipt of the command from the Line Commander, and subsequently notified the Line Commander that it is ready for production, via corresponding messages. Then, the Line Commander sends an immediate stop command to the Accumulator to stop it immediately, and the Accumulator sets autonomously in a package receive condition, and notifies the Line Commander accordingly via a corresponding message. In the end, when the blocked Distribution Equipment returns operative after an operator intervention, the unblocked Distribution Equipment notifies the Line Commander via a corresponding message.

Figure 19 shows commands and reply messages exchanged between the Line Commander and two downstream Distribution Equipments, referenced by "Equipment(i)" and "Equipment(i+1)", when the speed photocell sensor of the in-feed Conveyor of the first Distribution Equipment just downstream of the Filling Machine, in this example the one reference by "Equipment(i)", activates. As shown, initially the Line Commander initializes the two Distribution Equipments by sending thereto respective commands containing their operating nominal capacities and overcapacities, in this example 24.000 and 24.000+MAX% packages/hour, respectively. When the speed photocell sensor of the in-feed Conveyor of the first Distribution Equipment activates, the first Distribution Equipment autonomously switches its operating capacity from the nominal capacity to the overcapacity, and notifies the Line Commander accordingly by sending a corresponding message. In response to this message, the Line Commander sends to the second Distribution Equipment "Equipment(i+1)" a command to switch its operating capacity from the nominal capacity to the overcapacity. After a while, the speed photocell sensor of the first Distribution Equipment "Equipment(i)" should deactivate, and when this happens the first Distribution Equipment autonomously switches its operating capacity from the overcapacity to the nominal capacity, and notifies the Line Commander accordingly by sending a corresponding message. In response to this message, the Line Commander sends to the second Distribution Equipment "Equipment(i+1)" a command to switch its operating capacity from the overcapacity to the nominal capacity.

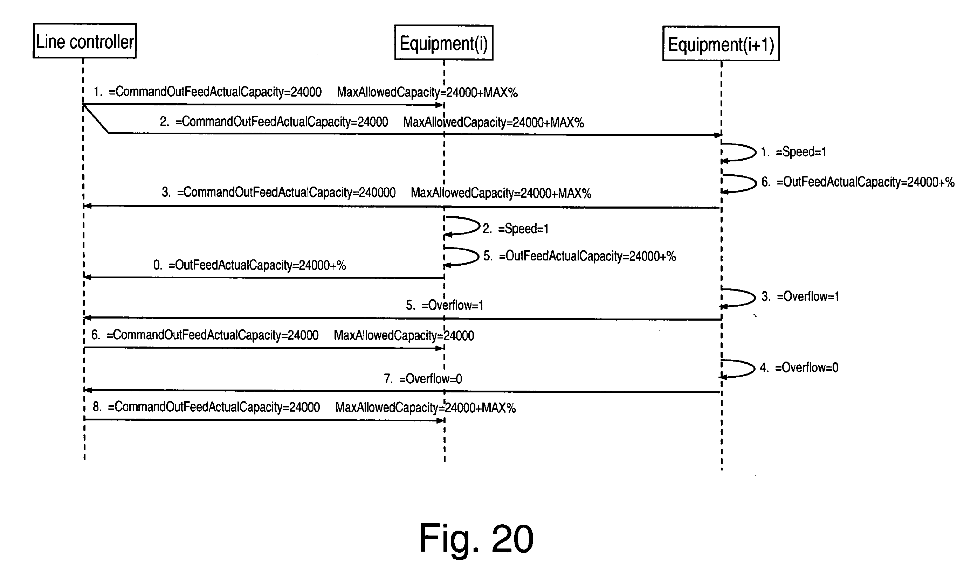

Figure 20 shows commands and reply messages exchanged between the Line Commander and the two downstream Distribution Equipments of Figure 19 when the speed photocell sensors of the in-feed Conveyors of both Distribution Equipments activate, and when the overflow photocell sensor of the in-feed Conveyor of the second Distribution Equipments "Equipment(i+1)" activates. In this scenario, the two Distribution Equipments react to the activation of the respective speed photocell sensors in the same way as what has been previously described with reference to Figure 19 by autonomously switching their operating capacities from the nominal capacities to the overcapacities, and notifying Line Commander accordingly. When the overflow photocell sensor of the in-feed Conveyor of the second Distribution Equipments "Equipment(i+1)" activates, the Line Commander is notified accordingly by a corresponding message from the second Distribution Equipments "Equipment(i+1)". In response to this message, the Line Commander sends a command to the first Distribution Equipment "Equipment(i)" to reduce its current overcapacity to a value equal to the nominal capacity, in this example 24.000 packages/hour. After a while, the overflow photocell sensor of the second Distribution Equipment "Equipment(i+1)" should deactivate, and when this happens the Line Commander is notified accordingly by a corresponding message from the second Distribution Equipment "Equipment(i+1)". In response to this message, the Line Commander sends a command to the first Distribution Equipment "Equipment(i)" to restore the initial value of the overcapacity thereof, in this example 24.000+MAX%.

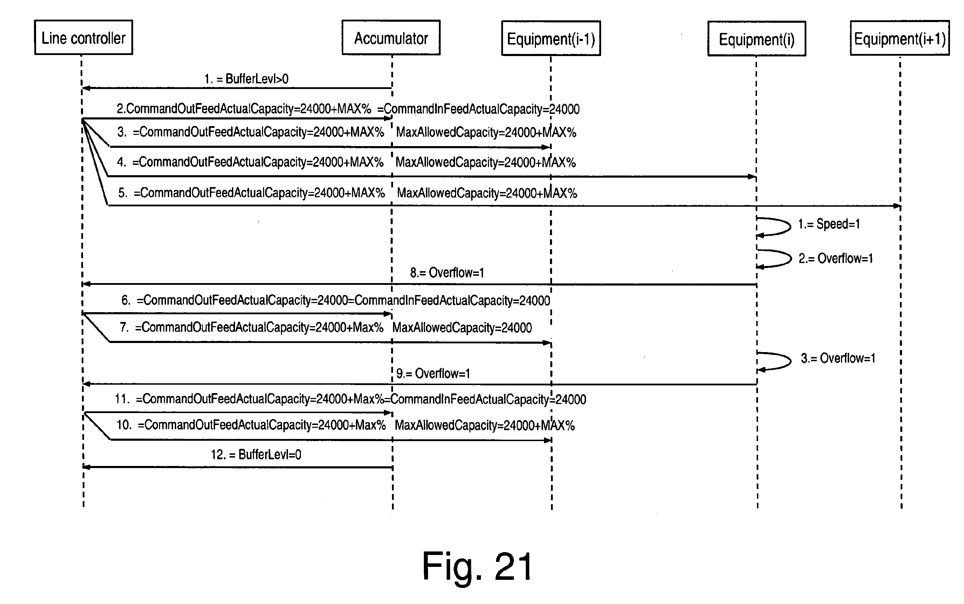

Figure 21 shows commands and reply messages exchanged between the Line Commander, an Accumulator, and three downstream Distribution Equipments, referenced by "Equipment(i-1)", "Equipment(i)", and "Equipment(i+1)", when both the speed and the overflow photocell sensors of the in-feed Conveyor of the intermediate Distribution Equipment, in the example the one referenced by "Equipment(i)", activate. As shown, initially the Line Commander initializes the Accumulator, by sending thereto a command containing the in-feed and out-feed capacities, in this example 24.000 and 24.000+MAX% packages/hour, respectively, and the three Distribution Equipments, by sending thereto respective commands containing their operating nominal capacities and overcapacities, in this example both equal to 24.000+MAX% packages/hour. When both the speed and the overflow photocell sensors of the in-feed Conveyor of the second Distribution Equipment "Equipment(i)" activate, the Line Commander is notified of the activation of the overflow photocell sensor by a corresponding message from the second Distribution Equipment "Equipment(i)". In response to this message, the Line Commander sends commands to the Accumulator and to the first Distribution equipment "Equipment (i-1)" to reduce the out-feed capacity of the former and the overcapacity of the latter to a value equal to the in-feed capacity of the Accumulator, in this example 24.000 packages/hour. After a while, the overflow photocell sensor of the second Distribution Equipment "Equipment(i)" should deactivate, and when this happens the Line Commander is notified accordingly by a corresponding message from the second Distribution Equipment "Equipment(i)". In response to this message, the Line Commander sends a command to the Accumulator and to the first Distribution Equipment "Equipment(i-1)" to restore the initial values out-feed capacity of the former and the overcapacity of the latter, in this example 24.000+MAX% packages/hour.

Coming back to the software applications in the Line Controller, the Recipe Manager is the software application designed to automatically configure the Packaging Line to implement a Production Recipe selected by an operator via the Line Controller, wherein the Filling Machine and a set of individual Distribution Equipments in the Packaging Line are identified to cooperate in producing a desired final product (package). In particular, the Filling Machine and each individual Distribution Equipment in the Packaging Line is configured to implement one or more stored Machine Recipes which allow specific intermediate products (packages) to be produced. Hence, as shown in Figure 22, when an operator selects, via the keyboard of the Line Controller, a desired Production Recipe, identified by an associated name, the Recipe Manager is configured to determine the individual intermediate products (packages) involved in the production of the desired final product specified in the Production Recipe, and, based on that, to determine the specific Packaging Line layout, namely the specific configuration of individual Distribution Equipments in the Packaging Line, necessary to achieve the desired final product, and the individual Machine Recipes in the Filling Machine and in each individual Distribution Equipment necessary to obtain the identified intermediate products. When the individual Machine Recipes have been identified, the Recipe Manager is configured to upload in the Line Controller the tuning and automation parameters of the Packaging Line stored in the aforementioned compact flash memory card, and associated with the Production Recipe, and to transmit to the Filling Machine and the identified Distribution Equipments the respective individual Machine Recipes to be implemented and the tuning and automation parameters uploaded. The Filling Machine and each identified Distribution Equipment uploads the operating parameters stored in the respective compact flash memory card, and associated with the Machine Recipe received from the recipe Manager.

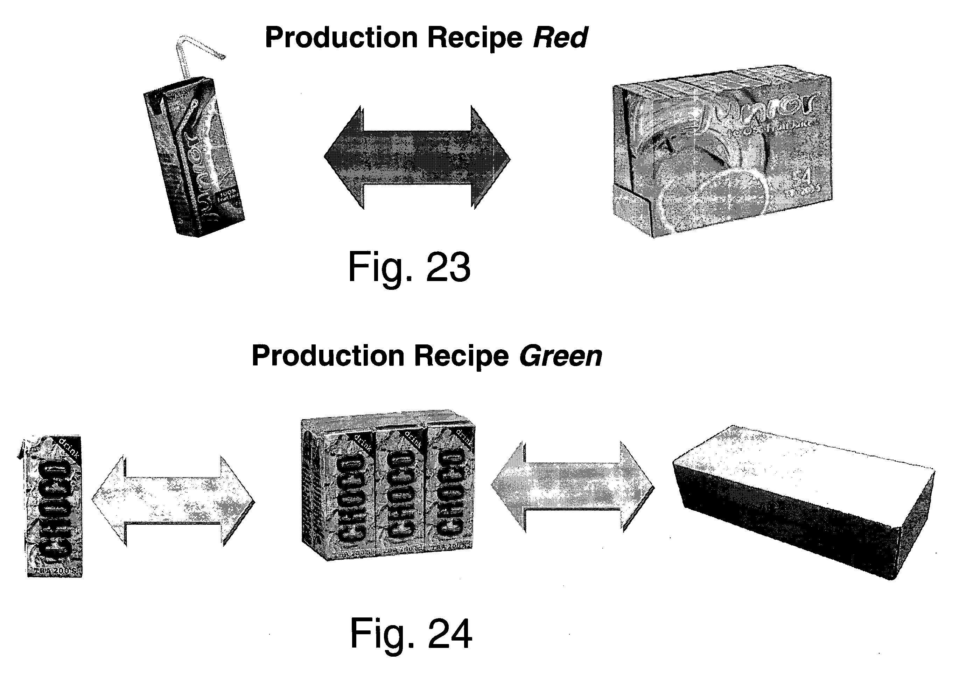

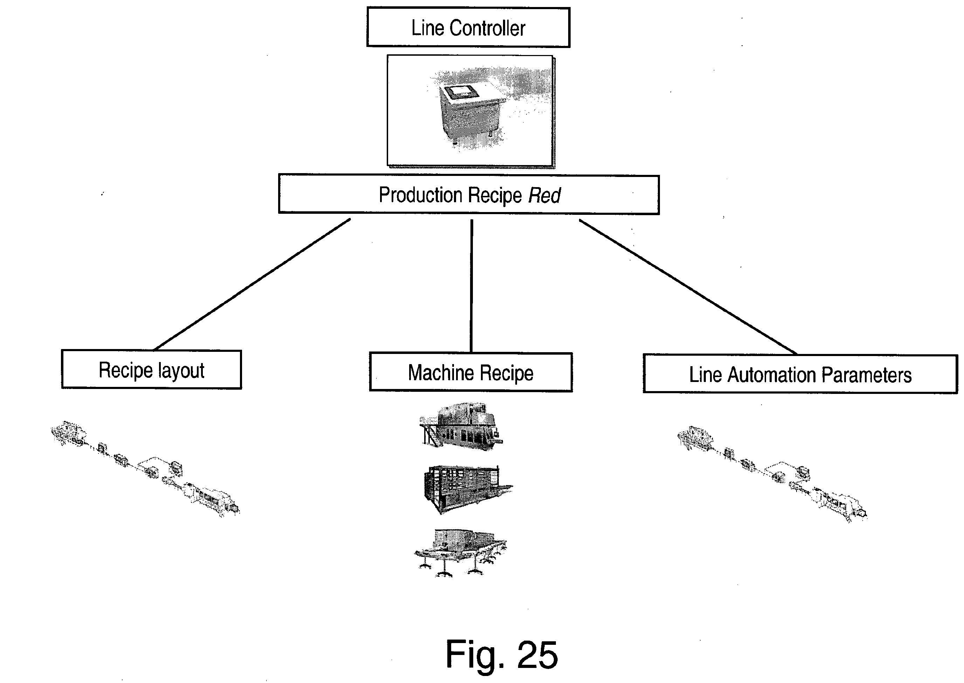

Figures 23 and 24 are exemplary of the initial, intermediate and final packages related to two different Production Recipes named Red and Green, respectively, while Figure 25 depicts the Production Recipe definition.

To do so, the Recipe Manager is designed to allow the following functionalities to be selected and executed, and to carry out the following tasks:
- Recipe Configuration, which allows an operator to create (define/edit) and store a Production Recipe, and to carry out different operations, such as Packaging Line layout definition, Machine Recipe selection, Packaging Line capacity definition, etc., via Recipe Manager soft-keys. Figure 16 shows the configuration window related to the Recipe Configuration function;
- Recipe Execution, which allows a created Production Recipe to be selected and started up via the Recipe Manager soft-keys;
- Production Interlocking, which allows human dependency in controlling key production parameter to be reduced;
- Machine Interlocking, which allows mismatches between Production and Machine Recipes to be avoided;
- Layout Interlocking, which allows mismatches in layout configuration to be avoided;
- Production Material Interlocking, which prevents any mismatch between the type of material introduced by an operator in the Filling Machine and Distribution Equipments (packaging material, cap, straw, glue, etc.) and the type of material defined in the Production Recipe; and
- PLMS Data Handler, which allows factory floor data related to the selected Production Recipe to be automatically provided to a Product and Packaging Line Monitoring System (PLMS) Centre, which will be described in detail hereinafter.

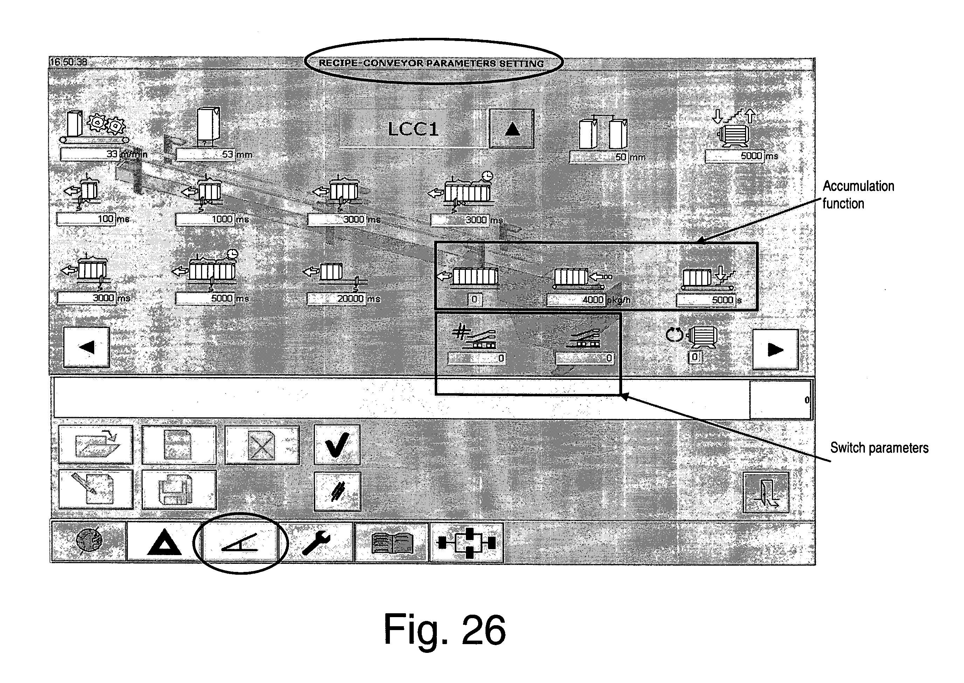

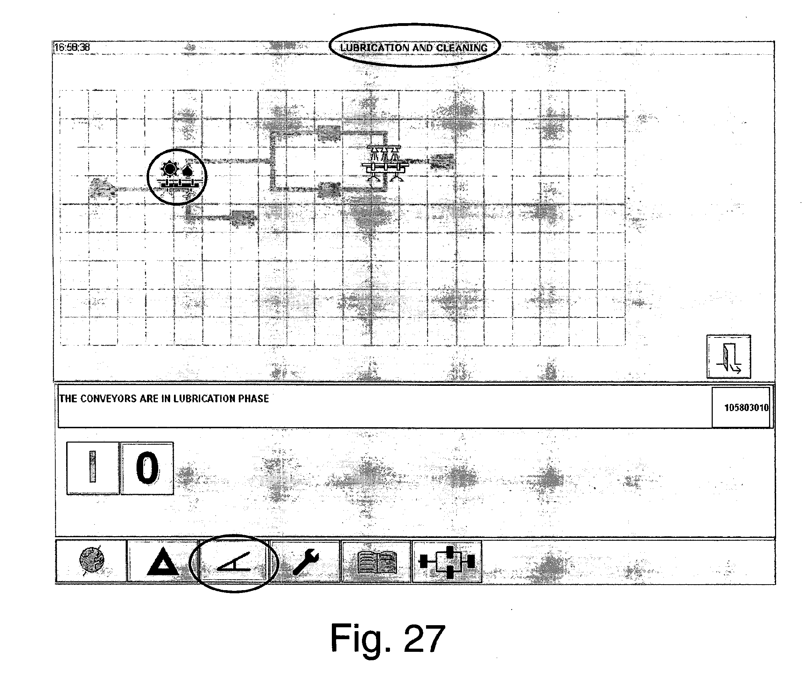

With reference again to the software applications in the Line Controller, the Conveyor Optimizer is the software application designed to optimize package transportation along the Packaging Line. In particular, the Conveyor Optimizer allows an operator to select and execute the following functions:
- Conveyor Settings, which allows the operator to set the operating parameters of each Conveyor in the Packaging Line other than those of the Filling machine and the Distribution Equipment and directly controlled by the Line Controller, such as the Conveyor speed, the package width, the package distance, the Configuration Switch parameters, the accumulation function, etc. Figure 26 shows the configuration window related to the Conveyor Settings function. The example shown in Figure 26 relates to the setting of the operating parameters of the Conveyor LCC1; and
- Lubrication and Cleaning, which allows the operator to operate a Conveyor lubricating and cleaning unit. Figure 27 shows the configuration window related to the Conveyor Lubrication and Cleaning function.

Coming back to Figure 1, the PLMS Centre is a data management system designed to monitor the operational performance of the Filling Machine and the Distribution Equipments in the Packaging Line, and to maximise operational equipment performance based on plant floor data. The PLMS Centre also provides powerful and easy-to-use tools to analyze operational equipment performance and process behavior. Operational performance data are automatically captured and logged at the Packaging Line. Local manual input interaction makes data comprehensive. Information distribution to the factory office level allows real-time supervision and historical analysis. The PLMS Centre allows optimum results to be achieved through the timely identification of downtime issues. The analysis of the production performance details identifies the critical performing equipment, and charts and reports are the tools to identify highest downtime reasons.

One of the main features provided by the PLMS Centre is the traceability and process monitoring function. Through a Graphical User Interface, an Operator Sheet is provided which is the electronic replacement of the production paper handwritten document. Data can be entered on operator demand or automatically requested by the system based on equipment events. Data entry is possible through manual input or using a barcode scanner. Data logged in the Operator Sheet may for example be operator production checks, material used by the Packaging Line, such as packaging material, strips, caps, straws, etc., special production events such as batch id, batch start, batch stop, etc., operator IDs, locally-defined custom events, etc. Based on the data logged at the Filling Machine, the PLMS Centre carries out a performance analysis and provides an Operator Sheet Report. This allows monitoring of process parameters and critical control points during production. Process monitoring gives the possibility to execute advanced trouble shooting on machine process variables.

The PLMS Centre also allows comprehensive traceability to be achieved by time synchronization. In fact, the PLMS Centre offers the possibility to synchronize the data logging time to a central time synchronization system, and the dating unit clock is synchronized locally by PLMS data logging system clock.

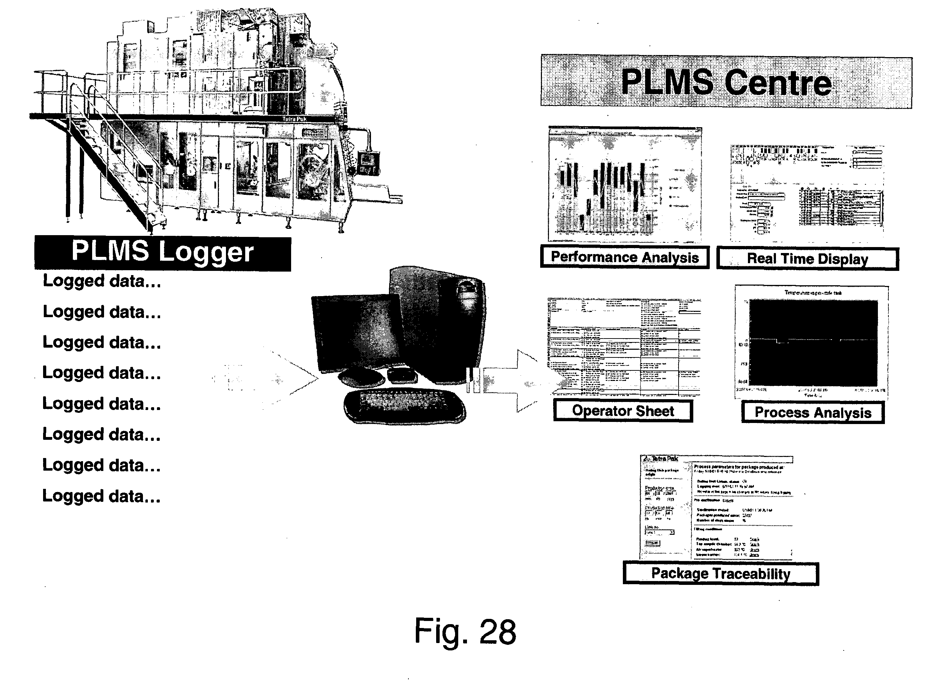

More in detail, as shown in Figure 28, the PLMS Centre is designed to carry out the following tasks:
- Performance Analysis,
- Real Time Display,
- Process Analysis,
- Package Traceability, and
- Manufacturing Execution Systems (MES) Integrator.

In particular, the Performance Analysis task includes:
- Analysis with graphs:
   - Packaging Line, Filling Machine and Distribution Equipment performance analysis,
   - Packaging Line and Filling Machine performance comparison,
   - Efficiency analysis,
   - Downtime, waste and frequency analysis, and
   - Trend;
- Analysis with reports:
   - Production, waste, stop, summary reports,
   - Event report;
- Operator Sheet reports; and
- Analysis by shift, days, weeks, months or years.
   The Real Time Display task includes:

- Packaging Line Supervision:
   - Packaging Line real time status overview,
   - Filling Machine and Distribution Equipment status,
   - Produced package counters,
   - Package waste indication, and
   - Equipment event list;
- Short term analysis tool:
   - Current and previous shift/day analysis,
   - Top 10 list of stop reasons, and
   - Main Line performance measures.
      The Process Analysis task includes:

- Process variable trend examination:
   - Analog variables,
   - Digital signals,
   - Set-Point values; and
- Process analysis:
   - Cursors for absolute/relative values,
   - Variable comparison, and
   - Zoom and Pan functions.
      The Package Traceability task includes:

- Per-Package process tracing:
   - Process parameters,
   - Set-point values, and
   - Relevant event history (stops, cleaning, etc.);
- Per-Package material bill:
   - Operator sheet information,
   - Packaging material/Strip/Tabs/Caps, and
   - Product batch ID.

In the end, the MES Integrator task provide an open interface based on XML standards and includes:
- Per-Batch tracking:
   - Performance indicators,
   - Counter values (Packages/units produced, waste, etc.), and
   - Relevant event history;
- Per-Batch material bill:
   - Operator sheet information,
   - Packaging material/Strip/Tabs/Caps, and
   - Product batch ID.

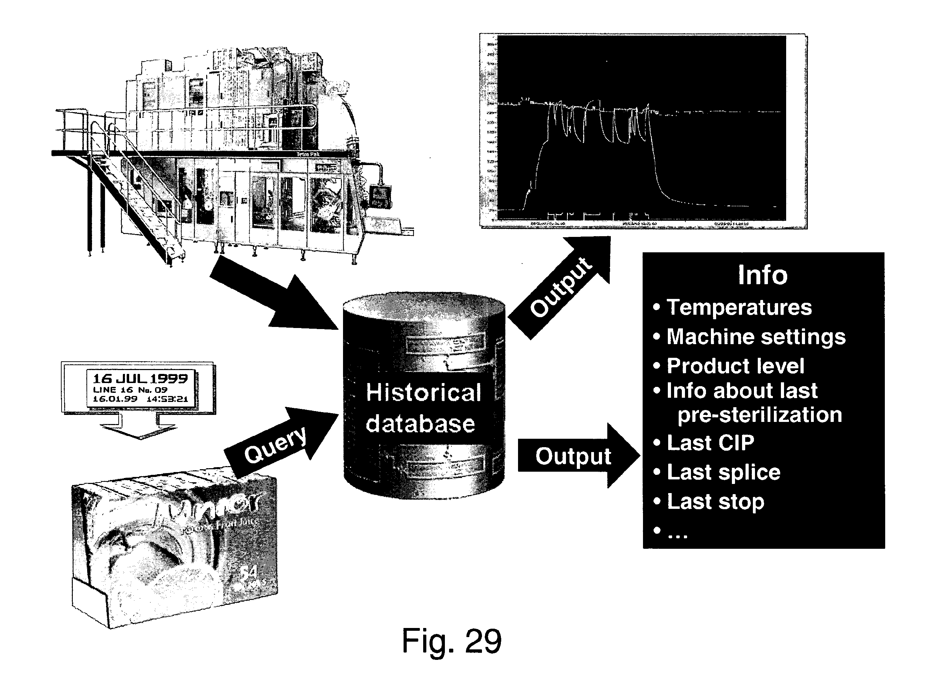

Figure 29 shows in more detail the package traceability task carried out by the PLMS Centre. When a query is received about a particular product, based on data logged in a Historical Database and coming from the Filling Machine, the PLMS Centre may provide different outputs including a chart displayed in a window of the Graphical User Interface and a report including information such as temperatures, machine settings, product level, info about last pre-sterilization, last Cleaning in Place (CIP), last splice, last stop, etc.

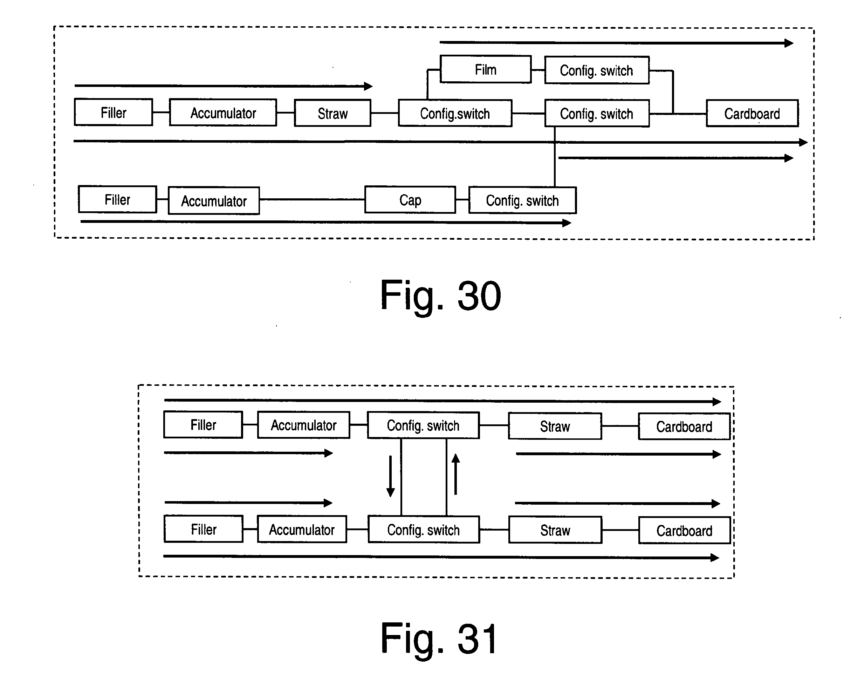

Figures 30 to 34 show different schematic layouts of an integrated Packaging System according to a second embodiment of the present invention, wherein same reference numerals as those in Figure 1 reference the same elements.

The Packaging Systems shown in Figures 30 to 34 differ from that shown in Figure 1 in that they are of a so-called Multi-Switch type. In particular, unlike a so-called Multi-Line Packaging System, wherein a plurality of operatively stand-alone Packaging Lines, i.e., Packaging Lines which do not share downstream Distribution Equipments, are provided, a Multi-Switch Packaging System includes a plurality of operatively cooperating Packaging Lines, i.e., Packaging Lines designed to share one or more Distribution Equipments, so increasing the flexibility and the production variability for the customer.

A Multi-Switch Packaging System may include either a single-tier control architecture with a single, common Line Controller programmed to manage configuration, communication and control of all the Packaging Lines with the aim of optimizing the interaction between the Filling Machines and the Distribution Equipments to improve the Multi-Switch Packaging System performance and product transportation during production, or a two-tier control architecture with a slave Line Controller for each Packaging Line, and a master Line Controller for the slave Line Controllers. In the single-tier control architecture, the PLMS Centre is programmed to cooperate with the common Line Controller, while in the two-tier control architecture the PLMS Centre is programmed to cooperate either with the master Line Controller, or with the slave Line Controllers, or with both the master Line Controller and the slave Line Controllers.

An extensive investigation carried out by the Applicant in the food packaging field has shown that three main architectural topologies of Multi-Switch Packaging Systems are needed to meet customers' demands, namely:
- Production Differentiation: Figure 30 shows a Multi-Switch Packaging System with a layout wherein two single Packaging Lines share a common Cardboard Packer. In particular, the first Packaging Line includes, in order, a Filling Machine, an Accumulator, a Straw Applicator, a first Configuration Switch, a first and a second branch branching off from the first Configuration Switch and merging into a Cardboard Packer, the first branch including a Film Wrapper and a second Configuration Switch, and the second branch including a third Configuration Switch. The second Packaging Line includes, in order, a Filling Machine, an Accumulator, a Cap Applicator, and a fourth Configuration Switch connected to the third Configuration Switch in the second branch of the first Packaging Line. The layout shown in Figure 30 allows three possible Production Recipes to be simultaneously implemented, which are depicted with continuous, dashed, and dotted arrows, and in particular:
   - a first Production Recipe (continuous arrow), wherein the packages flow through the first Packaging Line only, and in particular, through the Filling Machine, the Accumulator, the Straw Applicator, the first Configuration Switch, the first branch, and the Cardboard Packer;
   - a second Production Recipe (dashed arrow), wherein the packages flow through the first Packaging Line only, and in particular, through the Filling Machine, the Accumulator, the Straw Applicator, the first Configuration Switch, the second branch, and the Cardboard Packer; and
   - a third Production Recipe (dotted arrow), wherein the packages produced by the Filling Machine in the second Packaging Line flow through the second Packaging Line, and, thorough the second and third Configuration Switches, are redirected to the Cardboard Packer in the first Packaging Line;

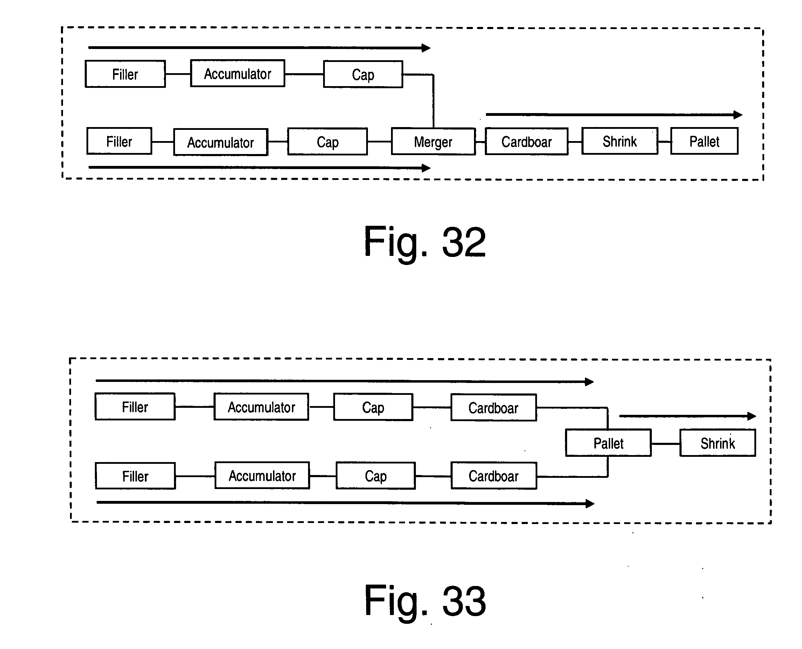

In another layout, which is not shown, two Filling Machines, configured to produce differently shaped packages, may share all of the downstream Distribution Equipments.
- Backup: Figure 31 shows a Multi-Switch Packaging System with a layout that allows a package flow from one Packaging Line to be redirected to the other Packaging Line, so increasing the flexibility in case of Distribution Equipment maintenance and breakdown. In particular, the Packaging System shown in Figure 31 includes two identical single Packaging Lines, each including, in order, a Filling Machine, an Accumulator, a Configuration Switch, a Straw Applicator, and a Cardboard Packer, wherein the two Configuration Switches are mutually connected to allow the Straw Applicator and the Cardboard Packer in one Packaging Line to work on packages produced by a Filling Machine in the other Packaging Line. The layout shown in Figure 31 allows four possible Production Recipes to be simultaneously implemented, which are depicted with continuous, dashed, and dotted arrows, and in particular:
   - a first Production Recipe (continuous arrows), wherein the packages flow through the first Packaging Line only;
   - a second Production Recipe (continuous arrows), wherein the packages flow through the second Packaging Line only;
   - a third Production Recipe (dashed arrow), wherein the packages produced by the Filling Machine in the first Packaging Line flow through the Accumulator in the same Packaging Line, the two mutually connected Configuration Switches, and the Straw Applicator and Cardboard Packer in the second Packaging Line; and
   - a fourth Production Recipe (dotted arrow), wherein the packages produced by the Filling Machine in the second Packaging Line flow through the Accumulator in the same Packaging Line, the two mutually connected Configuration Switches, and the Straw Applicator and Cardboard Packer in the first Packaging Line;
- Flow Merge: Figures 32 and 33 show a Multi-Switch Packaging System with a layout that allows two package flows to be merged into one, so reducing the number of Distribution Equipments involved in the production. In particular, in the Multi-Switch Packaging System shown in Figure 32, a common Palletizer is shared between two Packaging Lines, wherein the first Packaging Line includes a Filling Machine, an Accumulator, and a Cap Applicator, and the second Packaging Line includes a Filling Machine, an Accumulator, a Cap Applicator, a Merger, a Cardboard Packer, a Cardboard Tray Wrapper, and a Palletizer. In the Multi-Switch Packaging System shown in Figure 33, a common Palletizer and a common Film Wrapper are shared between two identical Packaging Lines, each including a Filling Machine, an Accumulator, a Cap Applicator, and a Cardboard Packer. In another layout, which is not shown, the Packaging Lines share a common Film Wrapper, and each includes a Filling Machine, an Accumulator, a Straw Applicator, a Film Wrapper, and a Cardboard Packer. In these Packaging Systems the two Packaging Lines may be operated simultaneously or one at a time, with different production capacities.

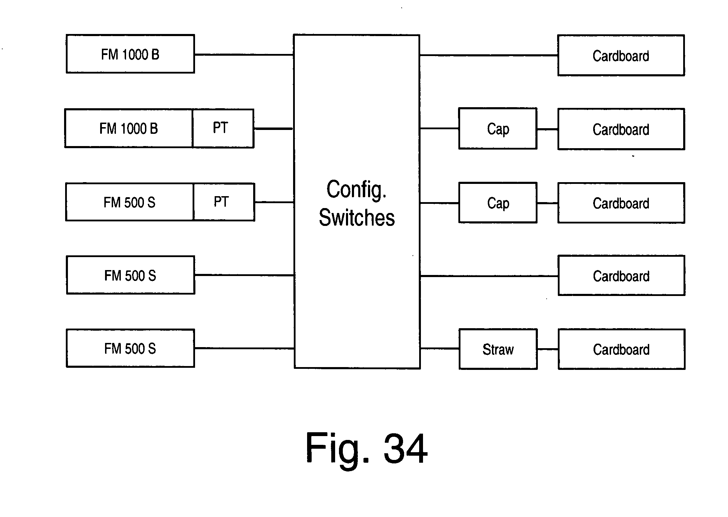

In the end, Figure 34 shows a Multi-Switch Packaging System embodying two of the aforementioned Multi-Switch layouts, namely the Backup layout and the Production Differentiation layout. In particular, the Packaging System shown in Figure 34 includes several Packaging Lines with Filling Machines which are configured to produce differently shaped packages, and two of which are also equipped with Pull-Tab Systems. Two Packaging Lines additionally include Cardboard Packers only, two Packaging Lines additionally include Cap Applicators and Cardboard Packers, and one Packaging Line additionally includes a Straw Applicator and a Cardboard Packer. In the end, all the Filling Machines share all the afore-mentioned downstream Distribution Equipments.

Finally, it is clear that numerous modifications and variants can be made to the present invention, all falling within the scope of the invention, as defined in the appended claims.

## Claims

1. A Line Controller (LC) for a Packaging System (PS), the Packaging System including:
• a Packaging Line (PL) comprising a Filling Machine (FM) and one or more Distribution Equipments (DE) connected via Conveyors, the Filling Machine and each Distribution Equipment including an electronic control system designed to store and execute one or more software modules; and
• a Communication Network designed to connect the Line Controller to the Filling Machine and each Distribution Equipment;
wherein the Line Controller (LC) is programmed to manage configuration, communication and control of the Packaging Line, and includes a display, a keyboard, and a processing system designed to store and execute one or more software applications configured to cooperate with the software modules in the Filling Machine and each Distribution Equipment; and wherein the software applications in the Line Controller include:
• a Line Configurator designed to provide the following configuration functionalities selectable/implementable via a Graphical User Interface (GUI):
- automatic detection and identification of the Filling Machine, Distribution Equipment(s) and Conveyor(s) in the Packaging Line, and automatic upload of the production/operating capabilities thereof;
- graphical drawing of a Packaging Line layout including graphical representations of Filling Machine, Distribution Equipment(s), and Conveyor(s);
- association of the graphical representations of Filling Machine, Distribution Equipment(s), and Conveyor(s), with identified Filling Machine, Distribution Equipment(s), and Conveyor(s); and
- setting of the production/operating parameters of the identified Filling Machine, Distribution Equipment(s), and Conveyor(s) in the Packaging Line, and of general automation parameters of the Packaging Line.

2. The Line Controller of claim 1, wherein the configuration functionality related to the automatic detection and identification of the Filling Machine, Distribution Equipment(s) and Conveyor(s), and automatic upload of the production/operating capabilities thereof includes:
• dispatch of identification requests to the Filling Machine and the Distribution Equipment(s);
• receipt of reply messages from the Filling Machine and the Distribution Equipment(s) containing respective identification data, in particular the IP address;
• probing for production information of the identified Filling Machine and the Distribution Equipment(s); and
• receipt of production information from the identified Filling Machine and the Distribution Equipment(s).

3. The Line Controller of claim 1 or 2, wherein in the functionality related to the graphical drawing of the Packaging Line layout the Graphical User Interface is designed to provide a display area divided into a plurality of display pixels, and to sequentially display graphical representations of Filling Machines, Distribution Equipments, and Conveyors in each display pixel when it is repeatedly clicked on.

4. The Line Controller of any preceding claim, wherein the functionality related to the association of the graphical representations of Filling Machine, Distribution Equipment(s), and Conveyor(s), with identified Filling Machine, Distribution Equipment(s), and Conveyor(s) includes:
• an association check to prevent any misassociation.

5. The Line Controller of any preceding claim, wherein the software applications in the Line Controller further include:
• a Line Commander designed to start/stop the Filling Machine and Distribution Equipment(s) according to a start/stop policy, and to dynamically regulate production capacities and operating parameters of the Filling Machine and the Distribution Equipment(s) according to a flow control policy during production.

6. The Line Controller of claim 5, wherein the Line Commander is further designed to monitor and provide visual information on the operation of the Filling Machine and the Distribution Equipment(s) in the Packaging Line.

7. The Line Controller of claim 6, further comprising a common overhead message display, and wherein the Line Commander is configured to provide a basic visual information via the common overhead message display, and a detailed visual information via the Line Controller display.

8. The Line Controller of any preceding claim, wherein the Filling Machine and each Distribution Equipment is configured to implement one or more selectable, stored Machine Recipes, each of which allows a respective intermediate product to be produced, and the Line Controller is configured to store one or more selectable Productions Recipes, each of which allows a final product to be produced via the production of one or more intermediate products;
and wherein the software applications in the Line Controller further include:
• a Recipe Manager designed to automatically configure the Packaging Line to implement a selected Production Recipe.

9. The Line Controller of claim 8, wherein the Recipe Manager is further designed to identify a specific configuration of Distribution Equipments and the Machine Recipes in the Filling Machine and in the identified Distribution Equipment(s) which are necessary to produce the final product corresponding to the selected Production Recipe.

10. The Line Controller of claim 9, wherein the Recipe Manager is further designed to upload in the Line Controller the production/operating parameters associated with the identified Machine Recipes, and to transmit them to the Filling Machine and the identified Distribution Equipment(s).

11. The Line Controller of any preceding claim 8 to 10, wherein the Recipe Manager is further designed to allows a Production Recipe to be created and stored, and a stored Production Recipe to be selected for implementation, via a Graphical User Interface (GUI).

12. The Line Controller of any preceding claim 8 to 11, wherein the Recipe Manager is further designed to perform one or more of the following tasks:
• Production Interlocking, to reduce human dependency in controlling key production parameter;
• Machine Interlocking, to prevent mismatches between Production and Machine Recipes;
• Layout Interlocking to prevent mismatches in the Packaging Line layout configuration;
• Production Material Interlocking, to prevent mismatches between the type of material used in the Filling Machine and Distribution Equipments and the type of material defined in the selected Production Recipe; and
• Data Handler, to automatically provide a Packaging Line Monitoring System (PLMS) with factory floor data related to the selected Production Recipe.

13. The Line Controller of any preceding claim, wherein the software applications in the Line Controller further include:
• a Conveyor Optimizer designed to provide the following optimization functionalities selectable/implementable via a Graphical User Interface (GUI):
- setting of operating parameters of each Conveyor in the Packaging Line; and
- operation of a Conveyor lubricating and cleaning unit.

14. A Packaging System (PS) including:
• a Packaging Line (PL) comprising a Filling Machine (FM) and one or more Distribution Equipments (DE) connected via Conveyors, the Filling Machine and each Distribution Equipment including an electronic control system designed to store and execute one or more software modules;
• a Line Controller (PL) of any preceding claim; and
• a Communication Network designed to connect the Line Controller to the Filling Machine and each Distribution Equipment.

15. The Packaging System of claim 14, further including a plurality of operatively-cooperating Packaging Lines designed to share one or more Distribution Equipments.

16. The Packaging System of claim 15, wherein the Packaging Lines are designed to operatively cooperate so as to achieve one or more of the following production purposes:
• Production Differentiation, wherein the Distribution Equipments are shared to simultaneously implement different Production Recipes;
• Backup, wherein the Distribution Equipments are shared to redirect a package flow from one Packaging Line to another to allow maintenance or breakdown management of a Distribution Equipment; and
• Flow Merge, wherein the Distribution Equipments are shared to merge two package flows into one to reduce the number of Distribution Equipments involved in the production.

17. The Packaging System of claim 15 or 16, wherein the Line Controller is common to all the Packaging Lines.

18. The Packaging System of claim 15 or 16, including a slave Line Controller for each Packaging Line, and a master Line Controller coupled to the slave Line Controllers.

19. The Packaging System of any preceding claim 14 to 18, further including:
• a Packaging Line Monitoring System (PLMS) designed to cooperate with the Line Controller to monitor the operational performance of the Filling Machine and Distribution Equipment(s) in the Packaging Line to allow real-time and/or historical performance analysis.

20. The Packaging System of claim 19, wherein the Packaging Line Monitoring System is further designed to provide product traceability and process monitoring functionalities implementable via a Graphical User Interface (GUI), based on data logged in a Historical Database.

21. The Packaging System of claim 20, wherein the product traceability functionality includes the provision of a graphical Operator Sheet where data can be entered on operator's demand or automatically requested based on equipment events, and of a graphical Operator Sheet Report based on data logged at the Filling Machine, which Operator Sheet Report allows monitoring of process parameters and critical control points during production.

22. The Packaging System of claim 20 or 21, wherein the product traceability functionality further includes time synchronization of the data logging time to a central time synchronization system.

23. A software program loadable into a memory of the processing system of the Line Controller of any preceding claim, and comprising one or more of the software applications of claims 1 to 13.
